(19) Europäisches Patentamt
European Patent Office
Office européen des brevets

(11) **EP 1 456 425 B1**

(12) **FASCICULE DE BREVET EUROPEEN**

(45) Date de publication et mention
de la délivrance du brevet:
**29.08.2007   Bulletin 2007/35**

(51) Int Cl.:
*C22B 21/00* (2006.01)  *F27D 21/00* (2006.01)
*F27D 19/00* (2006.01)  *G01N 21/39* (2006.01)

(21) Numéro de dépôt: 02785598.0

(22) Date de dépôt: **07.11.2002**

(86) Numéro de dépôt international:
**PCT/FR2002/003819**

(87) Numéro de publication internationale:
**WO 2003/056044 (10.07.2003 Gazette 2003/28)**

(54) **PROCEDE DE FUSION D'ALUMINIUM UTILISANT L'ANALYSE DES FUMEES SORTANT DU FOUR**

VERFAHREN ZUM SCHMELZEN VON ALUMINIUM UNTER VERWENDUNG DER ANALYSE DER OFENABGASE

ALUMINIUM MELTING METHOD USING ANALYSIS OF FUMES COMING FROM THE FURNACE

(84) Etats contractants désignés:
**AT BE BG CH CY CZ DE DK EE ES FI FR GB GR IE IT LI LU MC NL PT SE SK TR**

(30) Priorité:  **29.11.2001  FR 0115445**

(43) Date de publication de la demande:
**15.09.2004   Bulletin 2004/38**

(73) Titulaire: **L'AIR LIQUIDE, Société Anonyme pour l'Etude
et l'Exploitation des Procédés Georges Claude
75007 Paris (FR)**

(72) Inventeur: **DUCROCQ, Jean
F-78490 Bazoches-sur-Guyonne (FR)**

(74) Mandataire: **Vesin, Jacques et al
L'Air Liquide SA,
Direction de la Propriété Industrielle,
75 quai d'Orsay
75321 Paris Cédex 07 (FR)**

(56) Documents cités:
**EP-A- 0 793 071          GB-A- 2 286 458**

- **DATABASE WPI Section Ch, Week 198506 Derwent Publications Ltd., London, GB; Class M25, AN 1985-034933 XP002210656 & JP 59 229175 A (SUMITOMO METAL IND LTD), 22 décembre 1984 (1984-12-22)**
- **DATABASE WPI Section Ch, Week 198534 Derwent Publications Ltd., London, GB; Class J09, AN 1985-206136 XP002210657 & JP 60 129594 A (KAWASAKI STEEL CORP), 10 juillet 1985 (1985-07-10)**
- **PATENT ABSTRACTS OF JAPAN vol. 017, no. 146 (C-1039), 24 mars 1993 (1993-03-24) & JP 04 314835 A (DAIDO STEEL CO LTD), 6 novembre 1992 (1992-11-06)**

**Description**

Domaine technique et art antérieur

L'invention concerne le domaine de la fusion de l'aluminium et des fours destinés à la fusion de l'aluminium.

Elle s'applique notamment aux procédés de recyclage des déchets de l'aluminium.

Dans le domaine de la fusion de l'aluminium secondaire, l'impossibilité de pouvoir mesurer et maîtriser de nombreux phénomènes et paramètres pendant la fusion constitue un obstacle à la compréhension du processus de fusion, ainsi qu'à l'obtention de meilleures performances et à l'élaboration de règles permettant la suppression des pertes lors de la fusion.

La fusion se produit dans des fours rotatifs ou à réverbération. Le procédé peut être continu mais la plupart des fours travaillent de manière discontinue. Les matériaux sont chargés par d'immenses portes qui s'ouvrent dans les fours à réverbération et par la porte principale dans les fours rotatifs. Pour l'introduction de déchets en grand volume, le four doit être chargé deux ou trois fois par cycle de coulée.

L'aluminium ou ses alliages doivent être fondus au-delà de la température de fusion. Mais, pour que l'écoulement de l'aluminium liquide soit convenable lors du traitement ultérieur, par exemple dans les machines de coulée, il faut que le métal fondu atteigne un niveau de température de 760 ˚C. On cherche aussi à éviter toute surchauffe du bain liquide, notamment au-delà de 780 ˚C, température au-delà de laquelle la vitesse d'oxydation augmente considérablement, de manière presque exponentielle.

Au cours d'un cycle de coulée, on peut d'abord distinguer la période initiale, lorsque les matériaux sont solides, qui permet l'absorption d'une grande quantité de chaleur transformée en chaleur latente de fusion d'aluminium à 660 ˚C.

Ensuite, lorsque le métal est liquide, sa conductibilité thermique diminue à la moitié de sa valeur à l'état solide. Une surchauffe peut se produire, mais d'une manière non homogène, à cause des problèmes de distribution de chaleur.

Les grands fours à réverbération sont relativement plus sensibles à ce manque d'homogénéité. De la chaleur est introduite à partir de la surface du liquide, mais le rapport des densités est tel qu'une stratification stable se produit: le liquide chaud est dans la partie supérieure du bain et le liquide froid dans la partie inférieure.

Les fours à réverbération comportent des dispositifs supplémentaires, tels que des pompes ou des injecteurs de gaz, essentiellement destinés à assurer l'homogénéité du bain liquide, et permettant une procédure plus efficace de fusion.

Les fours rotatifs ne mettent en oeuvre que leur propre principe de mélange. De la chaleur est transmise par chauffage du réfractaire qui roule sous le liquide : la chaleur est amenée à la fois par la surface supérieure exposée à la flamme et par le fond qui est au contact du réfractaire rotatif. La stratification est ainsi déstabilisée.

Des pertes de métal lors de la fusion se produisent non seulement dans la couche oxydée elle-même, mais aussi parce que du liquide est piégé dans le squelette oxydé. Un mélange d'oxydes d'aluminium et d'aluminium piégé flotte alors sur le liquide en fusion. L'aluminium piégé peut représenter 20 à 80 % de la masse de ce qu'on appelle les crasses ou l'écume.

L'obtention d'un bon rendement en aluminium à partir de déchets recyclés nécessite une limitation des pertes au feu.

Deux solutions sont en outre appliquées pour la réduction des pertes de métal dans les crasses.

Les fours rotatifs, ainsi que certains fours à réverbération, sont d'abord chargés de fondants, à base de sels (mélange essentiellement de NaCl et KCl), destinés à réduire le mouillage des squelettes d'oxyde par l'aluminium piégé.

L'autre solution est l'écumage régulier de la surface. Non seulement l'écume flottant sur le métal liquide représente une perte de métal, mais elle constitue en outre une couche de matériau isolant qui recouvre le liquide. Comme elle est formée d'alumine, elle a une température élevée de fusion (plus de 1 300 ˚C) : elle ne fond pas à nouveau mais continue à s'accroître. L'introduction de chaleur à travers une telle couche isolante nécessite alors une puissance de plus en plus grande, c'est-à-dire la surchauffe de la couche supérieure. Un vieux dicton des fondeurs indique que "les crasses engendrent les crasses". Ces crasses peuvent être retirées par raclage de la surface : ceci constitue la procédure d'écumage.

Cette opération d'écumage est manuelle ou en tout cas très peu mécanisée.

Elle est réalisée essentiellement, dans les fours à réverbération, par l'ouverture des portes, ce qui provoque l'entrée d'une grande quantité d'air dans le four. Ceci présente deux inconvénients : le refroidissement (le retour à la température antérieure nécessite habituellement deux fois plus de temps que la période d'ouverture de la porte) et l'entrée d'oxygène de l'air qui oxyde facilement l'aluminium.

Il n'existe en outre aucun moyen permettant de déterminer quand les portes doivent être ouvertes pour l'écumage.

L'évaluation du rendement en métal est réalisée par pesée des déchets solides à l'entrée du four, avec déduction du poids estimé en peintures et revêtements et par pesée du poids de métal obtenu à la sortie du four. Ces peintures et revêtements sont, pendant le chauffage, l'objet d'une pyrolyse dont on constate qu'elle est achevée lorsque la charge atteint 580 ˚C ..

Cependant, ces techniques de production ne donnent aucune indication sur le moment auquel les crasses se forment et s'accumulent pendant le cycle de coulée. En conséquence, l'exécution d'une action quelconque, telle que la limitation du temps passé à température élevée pour la réduction de la production de ces crasses ou écumes, repose sur l'expérience de l'opérateur ou sur des règles empiriques obtenues sur une longue période et de manière fastidieuse. Toute conclusion relative à une telle action ne peut être tirée que de manière statistique car le matériau des déchets, par sa nature même, varie dans son origine et dans sa qualité.

Dans les fours à réverbération, les producteurs d'aluminium les plus avancés utilisent certains procédés de régulation, telle la vérification du niveau de température du réfractaire par un thermocouple, qui réduit la puissance de brûleurs ou qui commande l'arrêt d'un ou plusieurs brûleurs, lorsqu'un niveau critique de température est atteint. Cependant, ces opérations sont essentiellement destinées à assurer la sécurité du réfractaire.

Elles ne constituent pas une indication directe de la formation de points chauds, là où se produit l'oxydation.

D'autres producteurs vérifient la température du métal liquide par plongée d'un thermocouple dans le métal. Lorsqu'une température supérieure à 760 ˚C est détectée, la puissance des brûleurs est réduite ou de nouvelles matières sont chargées dans le four.

Cependant, il ne s'agit que d'une indication locale, et des points chauds peuvent apparaître à d'autres emplacements.

Une surveillance du niveau de température du réfractaire ou du métal liquide n'est donc pas suffisante pour ces opérations.

Par ailleurs, toutes ces solutions peuvent être mises en oeuvre sur les fours à réverbération, fixes ou basculants, mais elles ne conviennent pas aux fours rotatifs.

D'autres solutions sont présentées dans la littérature, mais qui visent surtout à éviter l'oxydation par absence de contact de la surface du métal avec tout oxydant.

Ainsi, le document JP 58-227706 propose d'utiliser la mesure des teneurs en CO et en H2 contenus dans les fumées pour s'assurer que, sur un four de fusion de métaux non-ferreux, les brûleurs installés fonctionnent en mode sous-stoechiométrique dans une plage de valeurs du rapport du débit d'oxydant au débit de combustible allant de 95 à 100%.

Le document EP 962 540 expose une technique de combustion en vue de la fusion d'un métal dans un four. Selon cette technique, un gaz contenant de l'oxygène est envoyé dans le four, de sorte qu'il reste séparé du bain de métal par la flamme du brûleur.

Le brûleur fonctionne alors de manière sous-stoechiométrique. L'apport en oxygène provient de la zone située au-dessus de la flamme, cette dernière faisant écran entre l'oxygène du gaz et la surface du métal fondu.

Le document US 5 563 903 décrit une technique selon laquelle un gaz neutre ou non oxydant fait écran entre la surface du métal (aluminium) fondu et une zone de combustion située dans la partie supérieure du four.

Le document US 3 759 702 concerne une technique dans laquelle la fusion a lieu initialement à l'air libre, avec un brûleur mobile au-dessus de la surface des matériaux à fondre. La flamme du brûleur est réductrice, du fait, dans l'alimentation du brûleur, d'un léger excès stoechiométrique du combustible par rapport à l'oxygène.

JP-A-1992/293740 décrit la fusion d'aluminium dans un four à l'aide de brûleur oxycombustible.

JP-A-1992/314835 décrit un appareil pour contrôler la température d'un bain d'aluminium fondu et réguler la température du four à une valeur prédéterminée.

EP-A-793071 décrit un système de combustion optimisé couvrant une combustion complète des gaz dans un four dit « cubilot ».

GB-A-2286458 décrit un appareil de mesure d'oxygène dans une atmosphère à l'aide d'une diode laser.

Ces techniques sont soit complexes de mise en oeuvre, soit inadaptées à la fusion dans un four.

Il se pose donc le problème de trouver une technique d'obtention d'un bon rendement en métal dans un four de fusion.

Il se pose par ailleurs le problème de la détection précise du moment où se produit l'oxydation du métal au cours d'un cycle de coulée.

La connaissance du moment où se produit l'oxydation faciliterait le réglage des opérations de combustion pour la diminution ou la maîtrise de cette oxydation, sans qu'il soit nécessaire d'utiliser des statistiques de production qui reflètent autant la qualité des déchets que celle des techniques de fusion elles-mêmes.

Par ailleurs, la connaissance du moment où se produit l'oxydation et de l'importance de la quantité d'oxyde formé faciliterait la prise de décision concernant la mise en oeuvre de l'opération d'écumage.

Exposé de l'invention

L'invention concerne tout d'abord un procédé de détection de formation d'oxydes d'aluminium à la surface d'un bain d'aluminium dans un four de fusion d'aluminium, caractérisé en ce qu'on détecte les variations de concentration en CO et de la température dans les fumées sortant du four.

L'invention concerne aussi un procédé de fusion d'aluminium, dans lequel :

- on introduit de l'aluminium solide dans un four,
- on réalise la fusion de l'aluminium, pour former un bain d'aluminium.
- on détecte les variations de concentration en monoxyde de carbone (CO) et de la température dans les fumées sortant du four,
- on en déduit la formation d'oxydes d'aluminium à la surface du bain d'aluminium
- on régule le procédé de fusion en fonction de la formation d'oxydes d'aluminium.

Lors d'une oxydation de l'aluminium dans le four, ies variations de CO et de température sont dans le même sens, ou ont le même signe, ce qui permet de détecter aisément cette oxydation.

Selon l'invention, on peut donc détecter des valeurs positives du produit, ou du rapport, des dérivées par rapport au temps de CO et de la température afin d'identifier l'apparition de l'oxydation de l'aluminium, et ce sans avoir à ouvrir le four pour réaliser une observation visuelle et sans intervention d'un opérateur.

On peut donc utiliser l'analyse des gaz dégagés lors de la fusion pour détecter la formation des oxydes, et ce à l'aide des signaux de concentration en CO et de température.

Eventuellement, les variations de $CO_2$, et/ou de $O_2$ et/ou de $H_2O$ peuvent être également observées.

En particulier on peut évaluer les entrées d'air dans le four d'après l'évolution de la concentration de $H_2O$.

L'analyse des fumées du four peut être utilisée comme base pour la régulation d'un procédé de fusion par :

- adaptation de la densité de puissance de combustion,
- ou ajustement du rapport du débit d'oxydant au débit de combustible alimentant les brûleurs,
- ou agitation du bain par des pompes ou par injection de liquide,
- ou indication du fait que le niveau de puissance de combustion au-dessus du bain agité peut être accru ou non.

Une telle analyse de fumées peut aussi être utilisée pour optimiser la fréquence d'écumage.

Une mesure de température, ou un échantillonnage conditionnel en température, peut en outre être appliquée, afin de faire la différence entre les variations de signaux dues à l'oxydation et celles dues à la pyrolyse des peintures et revêtements formés sur les morceaux ou les déchets d'aluminium.

L'invention concerne également un dispositif de détection de formation d'oxydes d'aluminium à la surface d'un bain d'aluminium dans un four de fusion d'aluminium, caractérisé en ce qu'il comporte des moyens de détection de la variation en concentration en CO et en température dans les fumées sortant du four.

Selon une variante de réalisation selon l'invention, on détecte la formation d'oxydes d'aluminium à la surface d'un bain d'aluminium dans un four de fusion d'aluminium, à l'aide de moyens de détection de la variation en concentration en hydrogène de l'atmosphère au-dessus de la surface du bain et de moyens de mesure de la température dans les fumées sortant du four.

Un tel dispositif peut en outre comporter des moyens pour détecter des variations de concentration en $CO_2$ et/ou $H_2O$ et/ou $O_2$.

Des moyens peuvent être prévus pour réaliser une comparaison des sens de variation de la concentration en CO et de la température et/ou pour réaliser le produit ou le rapport des variations temporelles de la concentration en CO et de la température.

Egalement, des moyens peuvent être prévus pour réaliser une comparaison des valeurs des teneurs mesurées de CO et/ou de $H_2$ aux valeurs respectivement de CO et/ou $H_2$ qu'aurait produites le brûleur en l'absence d'interaction avec le charge. De telles valeurs peuvent être établies par une calibration du brûleur.

L'invention concerne également un four de fusion d'aluminium, de type à réverbération ou de type rotatif, comportant des dispositifs et/ou moyens tels qu'exposés ci-dessus.

Brève description des figures

- les figures 1, 4 et 5 représentent différentes variante d'un four de fusion d'aluminium selon l'invention,
- les figures 2, 3 et 6 représentent des mesures de concentration de gaz réalisées en sortie de deux fours.

Exposé détaillé de modes de réalisation de l'invention

Selon l'invention, on procède à la détection, dans les fumées en sortie du four, des variations de concentration en monoxyde de carbone (CO) et à la mesure des variations de température des fumées.

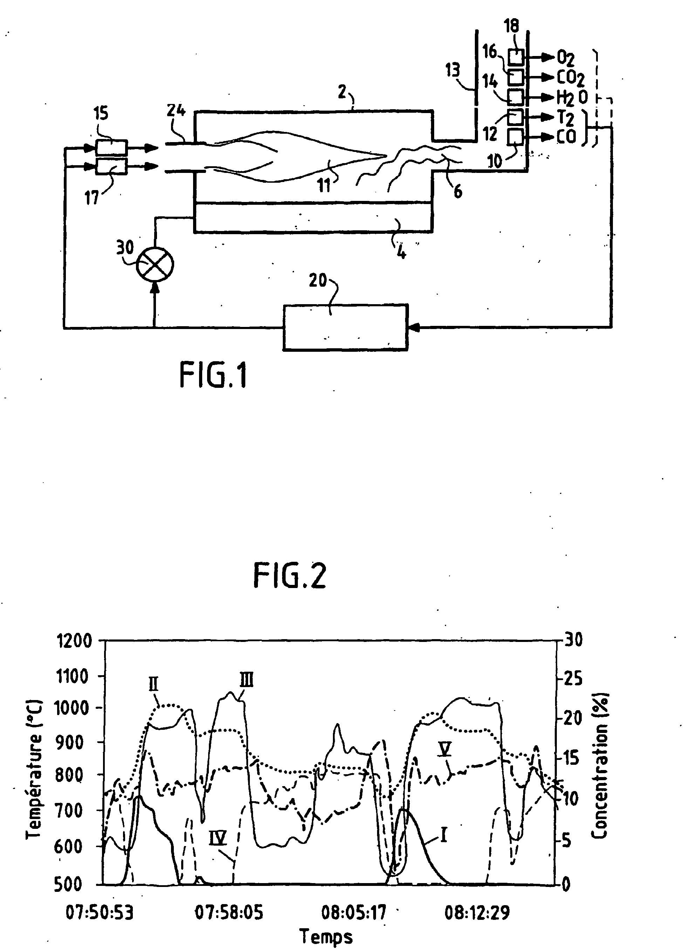

La figure 1 représente schématiquement un four 2 dans lequel un bain d'aluminium 4 est obtenu par fusion de déchets d'aluminium. Un brûleur 24, alimenté par un fluide oxydant (par exemple l'oxygène) et un fluide combustible (par exemple un gaz naturel), permet de produire une flamme 11 pour atteindre la température souhaitée dans le four.

Plusieurs brûleurs peuvent également être mis en oeuvre.

Les références 15 et 17 désignent en outre, respectivement, des moyens d'alimentation en oxydant et en combustible.

Des moyens 10 de mesure des variations de la quantité ou de la concentration de CO sont disposés en sortie du four, plus précisément dans une cheminée 13 d'évacuation des fumées 6.

Des moyens 12 permettent en outre de mesurer les variations de température approximativement au même endroit.

On peut en outre disposer des moyens 14, 16, 18 de mesure de la concentration en vapeur d'eau ($H_2O$) et/ou en dioxyde de carbone ($CO_2$) et/ou en oxygène ($O_2$) en sortie du four, dans le même conduit de cheminée.

Selon un exemple de réalisation, les moyens de mesure 10, 14, 16, 18 peuvent comporter une ou plusieurs diodes laser, tandis que les moyens 12 peuvent comporter un thermocouple indépendant.

La figure 2 représente diverses courbes I - V représentant respectivement, au cours d'un procédé de fusion dans un four à sole sèche :

- Courbe I : l'évolution de la teneur en monoxyde de carbone (CO),
- Courbe II : l'évolution de la température,
- Courbe III : l'évolution de la teneur en dioxyde de carbone ($CO_2$),
- Courbe IV : l'évolution de la teneur en oxygène ($O_2$),
- Courbe V : l'évolution de la teneur en vapeur d'eau ($H_2O$).

L'évolution des courbes I et II montre une corrélation entre les variations de CO et celles de la température.

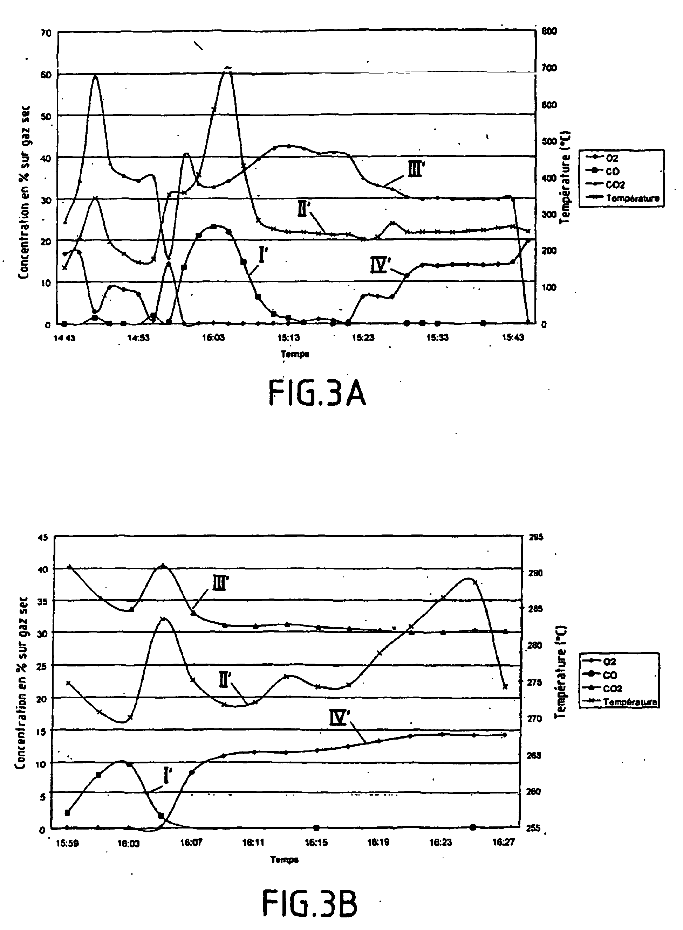

Les figures 3A et 3B représentent respectivement, au cours d'un procédé de fusion dans un four rotatif :

- Courbe I' : l'évolution de la teneur en CO,
- Courbe II' : l'évolution de la température,
- Courbe III' : l'évolution de la teneur en $CO_2$,
- Courbe IV' : l'évolution de la teneur en $O_2$.

La figure 3A correspond au cas d'un four à haute température, la figure 3B au cas d'un four à basse température.

Les conclusions permettant d'interpréter ces mesures sont les suivantes. On se référera également au tableau I ci-dessous.

La composition des fumées de combustion, essentiellement constituées de dioxyde de carbone $CO_2$ et de vapeur d'eau $H_2O$, est modifiée par le processus d'oxydation. L'oxydation se produit non seulement sous l'action de l'oxygène pur ou de l'oxygène contenu dans l'air, mais aussi du fait de la présence de $CO_2$ et de vapeur d'eau $H_2O$.

Autrement dit, l'oxygène ($O_2$), le dioxyde de carbone ($CO_2$) et la vapeur d'eau ($H_2O$) peuvent interagir avec la charge d'aluminium en formant de l'alumine.

En fait, la masse d'écume produite après déduction de l'aluminium piégé ne peut pas être expliquée par la seule oxydation directe. La quantité d'oxygène en excès du brûleur augmentée de l'air introduit dans le four ne suffit pas à cet effet.

Tableau I

| | Evolution de H2O | Mode de combustion riche en O2 | Mode de Combustion pauvre en O2 | Conditions d'échantillonnage |
|---|---|---|---|---|
| Cas d'une combustion simple | -Dépend uniquement de l'entrée d'air | -Pas d'observation de CO | -dCO/dt/dT/dt est négatif<br>-(CO/CO2) est connu pour un manque déterminé de O2 | |

(suite)

|  | Evolution de H2O | Mode de combustion riche en O2 | Mode de Combustion pauvre en O2 | Conditions d'échantillonnage |
|---|---|---|---|---|
| Cas d'une interaction fumées-charge | - Inférieur à la valeur précitée de référence pour mêmes réglages des débitmètres | **1er sous cas:**<br><br>-Pas d'observation de CO<br>-CO2 est stable<br>-Augmentation de température<br><br>**2ème sous cas :**<br>Observation de CO | -dCO/dt/dT/dt est positif<br>-(CO/CO2) est plus grand que ci-dessus pour des conditions de débits fixées. | T > 400 ˚C (augmentée de 100 à 400˚C. (valeur propre au four)) |

Dans le tableau I, les modes de combustion riche en oxygène (O2) et pauvre en oxygène correspondent à un signal de référence de brûleur établi par rapport à un four vide ou par rapport à de l'aluminium froid. Une évaluation à partir des réglages des débitmètres peut être utilisée comme référence.

La combustion simple se réfère à un système de combustion sans interaction avec la charge (soit le four d'aluminium est vide, soit l'aluminium est froid) mais avec une certaine entrée d'air dans le four. Il peut s'agir dans tous les cas de combustion mixte d'air et d'oxygène. La concentration de vapeur d'eau (H2O) est alors une mesure de l'entrée d'air.

On peut supposer, pour le montrer, que les déchets chargés ne contiennent pas d'eau. Les explosions dues à l'eau et à l'aluminium sont un problème dans toute l'industrie de l'aluminium et la charge est débarrassée de toute eau et même d'humidité.

La concentration en vapeur d'eau (H2O) est alors diluée par l'entrée d'air et on peut écrire :

$$\text{débit d'entrée d'air} =$$
$$\text{débit théorique de fumées}$$
$$[ \ (H2O) \ \text{théorique} - (H2O) \ \text{mesuré} \ ) \ / \ (H2O) \ \text{mesuré} \ ]$$

y compris dans le cas d'une combustion mixte à l'air et à l'oxygène, la concentration de H2O est une mesure d'entrée d'air si on la compare à la teneur en H2O déterminée théoriquement à partir de la connaissance du débit de combustible.

Vu que la quantité d'oxygène disponible est déterminée par addition de :

-   l'oxygène introduit par l'entrée d'air,
-   l'oxygène mesuré par les débitmètres (oxygène pur et air ajouté dans le mode de combustion mixte ou enrichi), la concentration de vapeur d'eau permet donc la détermination de la quantité d'oxygène disponible pour la combustion.

Lorsque l'interaction avec la charge se produit, la concentration en vapeur d'eau diminue suivant la relation :

$$2Al + 3H2O = Al2O3 + 3H2,$$

qui s'accompagne d'un dégagement d'hydrogène. Il y a lieu de tenir compte de ce phénomène lorsqu'on évalue les compositions gazeuses sur fumées dites sèches, après élimination habituellement par condensation de la vapeur d'eau. L'interaction entre l'aluminium et la vapeur d'eau augmente le débit de fumées sèches.

Les signaux de monoxyde de carbone (CO), dioxyde de carbone (CO2) et de température (T) dans des systèmes de combustion simples peuvent être expliqués de la manière suivante.

Dans les systèmes pauvres en oxygène, le monoxyde de carbone CO se forme et la teneur en dioxyde de carbone CO2 diminue. Ceci est imposé par la contrainte de masse appliquée aux atomes de carbone.

Le rapport CO/CO2 est indépendant du processus de combustion à l'air et l'oxygène. Il ne dépend que du manque d'oxygène.

L'énergie libérée dans les systèmes pauvres en oxygène est réduite. On sait que le rendement maximal de combustion se produit pour une production maximale de CO2. Le signal indique que le rapport des variations dans le temps de CO et de T (ou le rapport des dérivées par rapport au temps (dCO/dt)/(dT/dt)) est négatif (la concentration en CO augmente et cette augmentation résulte en une mauvaise combustion, T diminue donc).

Lorsque l'interaction avec la charge se produit, et dans des conditions apparentes riches en oxygène, soit une production de CO est observée, soit une augmentation de température à CO2 constant peut être observée.

Plus précisément, lorsque CO est dégagé par la réaction

$$Al + 3CO_2 = Al_2O_3 + 3CO,$$

il brûle en ajoutant de la chaleur au système (donc T augmente), d'après la relation :

$$3CO + 3/2O_2 = 3CO_2.$$

Les conditions de combustion de CO peuvent ne pas être efficaces à cause d'un mélange limité des réactifs (défaut d'intensité de turbulence).

L'addition de chaleur due au processus de combustion est renforcée par le caractère exothermique de la réaction de l'aluminium. Le signal est donc tel que dCO/dt/dT/dt est positif.

Cependant on observera que la plupart des producteurs d'aluminium ont tendance à travailler dans des conditions pauvres en oxygène. CO est alors produit par deux sources : la combustion incomplète et la réaction avec l'alumine Al2O3.

Le CO produit par le brûleur est une valeur déterminée pour un défaut d'oxygène connu. La production de CO par l'oxydation se déduit de la mesure totale de CO moins cette quantité produite par le brûleur. De plus, au cours d'une phase de fusion d'aluminium, les réglages de brûleur varient peu : les variations de CO associées à l'oxydation sont similaires aux variations de la quantité de CO total.

Lorsque l'interaction avec la charge se produit, dans des conditions pauvres en oxygène, une valeur positive de dCO/dt/dT/dt est une indication claire de l'oxydation, puisque la réaction avec l'alumine est exothermique.

Pour un même réglage pauvre en oxygène, c'est-à-dire des mêmes réglages des débits d'injection de combustible et d'oxydant, (CO)/(CO2) augmente plus vite que dans les cas de la combustion simple. L'augmentation du rapport CO/CO2 confirme la détection de l'oxydation car ce rapport est indépendant de la teneur en hydrogène H2 même sur fumées sèches.

Il est préférable de soumettre une valeur positive de (dCO/dt/dT/dt) à une mesure de la température ou à un échantillonnage conditionnel en température.

A basse température, une partie du carbone est libérée de la charge par pyrolyse des peintures et revêtements sur les déchets d'aluminium, le monoxyde de carbone CO provenant alors à la fois de la combustion proprement dite et de la décomposition du dioxyde de carbone CO2.

Si les déchets d'aluminium ont été préalablement traités, cette pyrolyse ne se produit pas dans le four.

La pyrolyse se produit jusqu'à une température d'environ 580 ˚C. A plus basse température, CO peut apparaître alors que l'oxygène peut manquer et que la température augmente.

Le rapport (dCO/dt)/(dT/dt) est alors positif.

En fait, dans un tel cas le processus de combustion est de type:

combustible + particules solides de carbone + oxygène = produits de combustion.

Si les conditions d'alimentation en oxygène restent inchangées par rapport à la combustion simple du combustible, l'oxygène manque.

Le processus de pyrolyse de la peinture et des revêtements paraît trop chaotique dans le four d'aluminium pour qu'on puisse le suivre ou l'observer.

En conséquence, une valeur positive de (dCO/dt/dT/dt) est de préférence soumise à une condition sur la température.

Celle-ci peut être mesurée dans le métal liquide, mais de préférence dans les fumées, la température des fumées reflétant la température du métal. Une différence de température de 100 à 400 ˚C permet le transfert de chaleur.

La mesure de la température peut être comparée à une valeur seuil prédéterminée, par exemple dans l'ordinateur 20.

On note également que, du fait de cette corrélation entre les températures des fumées et du métal, on peut préalablement mettre en oeuvre une période d'apprentissage sur chaque four, les fours rencontrés dans l'industrie de l'aluminium étant d'une grande variété.

De plus, les divers modes de transfert de chaleur ne se prêtent pas à une solution facile par modélisation, et une procédure d'apprentissage, par exemple par des réseaux de neurones est possible, sans exclusion d'une mesure plus simple de la différence de température entre le métal et les fumées.

D'autres conditions peuvent conduire en pratique à un signal dCO/dt/dT/dt à valeur positive.

Ceci est le cas lors de la mise en fonctionnement des brûleurs sur le métal chaud, qui peut se produire par exemple après une courte période d'arrêt des brûleurs, suite à une surchauffe des réfractaires. Dans ce cas, l'augmentation de température des fumées ne reflète pas un déséquilibre de la combustion ou une interaction chimique avec la charge, mais simplement une entrée d'énergie.

Néanmoins, si le monoxyde de carbone CO est produit en même temps, il indique une production d'oxyde d'aluminium sur le métal liquide chaud, très probablement sous le brûleur.

Ensuite, lorsque la couche oxydée recouvre le liquide, l'oxydation ralentit et le monoxyde de carbone (CO) diminue. Une valeur positive de dCO/dt/dT/dt est alors encore un détecteur d'oxydation.

Une variante de l'invention consiste à détecter l'oxydation de la surface d'aluminium par une mesure directe de la teneur en CO des fumées à laquelle on soustrait la teneur en CO qu'aurait produite le brûleur dans des conditions similaires de température et d'injection d'oxydant et de combustible en l'absence d'interaction avec la charge.

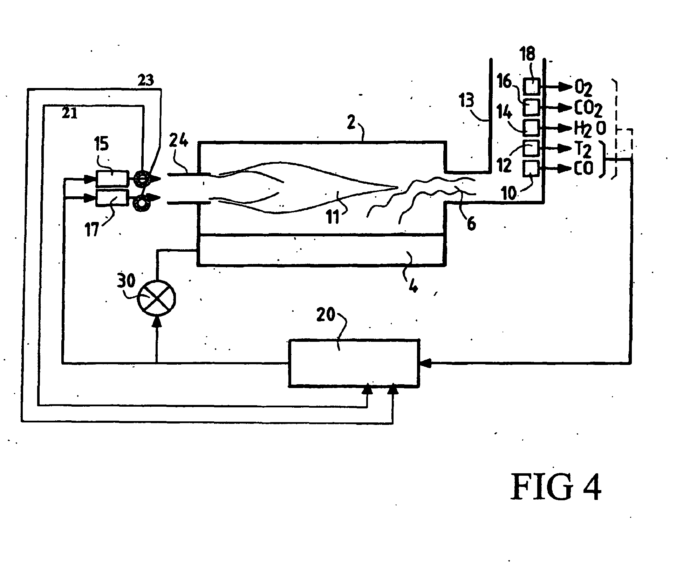

La réalisation pratique implique un dispositif en tout point similaire à celui présenté à la figure 1 mais en ajoutant au moyen d'injection d'oxydant 15 un débitmètre 21 et au moyen d'injection de combustible 17 un autre débitmètre 23 . Cette disposition est représentée sur la figure 4.

Un calibrage initial du brûleur permet de déterminer la teneur en CO produite par le brûleur seul en relevant la teneur en CO pour différentes valeurs de débit des injections et de température des fumées. De telles valeurs de CO mesurées par le dispositif 10 sont tabulées et introduites dans l'ordinateur 20 .

Ces valeurs tabulées sont soustraites à la teneur mesurées par 10 durant la fusion de l'aluminium et dans les mêmes conditions de débit de combustible, de débit d'oxydant et de température des fumées. La valeur ainsi obtenue indique la teneur en CO produite par la réaction d'oxydation entre l'aluminium et le $CO_2$ selon la réaction

$$Al + 3CO_2 = Al_2O_3 + 3CO,$$

Pour des raisons similaires à celles décrites ci-dessus, il convient de valider cette détection d'oxydation par un échantillonnage conditionnel en température puisque les produits de pyrolyse dégagés à basse température rendent la tabulation des valeurs de CO invalide.

Une troisième variante de l'invention est obtenue en mesurant la teneur en $H_2$ des fumées à laquelle on soustrait la teneur en $H_2$ qu'aurait produite le brûleur dans des conditions similaires de température et d'injection d'oxydant et de combustible en l'absence d'interaction avec la charge.

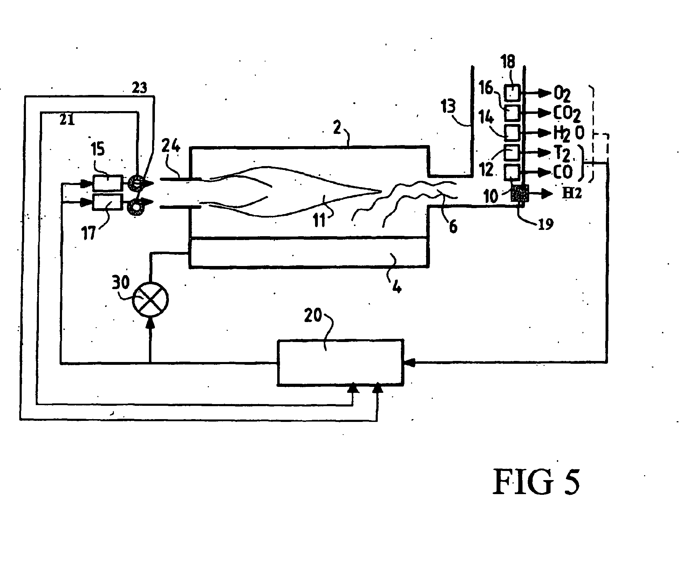

La réalisation pratique implique un dispositif en tout point similaire à celui présenté à la figure 4 mais en ajoutant aux moyens de détection de la composition des fumées un moyen 19 de mesure de la teneur en $H_2$ . Cette disposition est présentée à la figure 5.

Un calibrage initial du brûleur permet de déterminer la teneur en $H_2$ produite par le brûleur seul en relevant la teneur en $H_2$ pour différentes valeurs de débit des injections et de température des fumées. De telles valeurs de $H_2$ mesurées par le dispositif 10 sont tabulées et introduites dans l'ordinateur 20.

Ces valeurs tabulées sont soustraites à la teneur mesurées par 10 durant la fusion de l'aluminium et dans les mêmes conditions de débit de combustible, de débit d'oxydant et de température des fumées. La valeur ainsi obtenue indique la teneur en $H_2$ produite par la réaction d'oxydation entre l'aluminium et $H_2O$ selon la réaction

$$2Al + 3H_2O = Al_2O_3 + 3H_2,$$

Pour des raisons similaires à celles décrites ci-dessus, il convient de valider cette détection d'oxydation par un échantillonnage conditionnel en température puisque les produits de pyrolyse dégagés à basse température rendent la tabulation des valeurs de CO invalide.

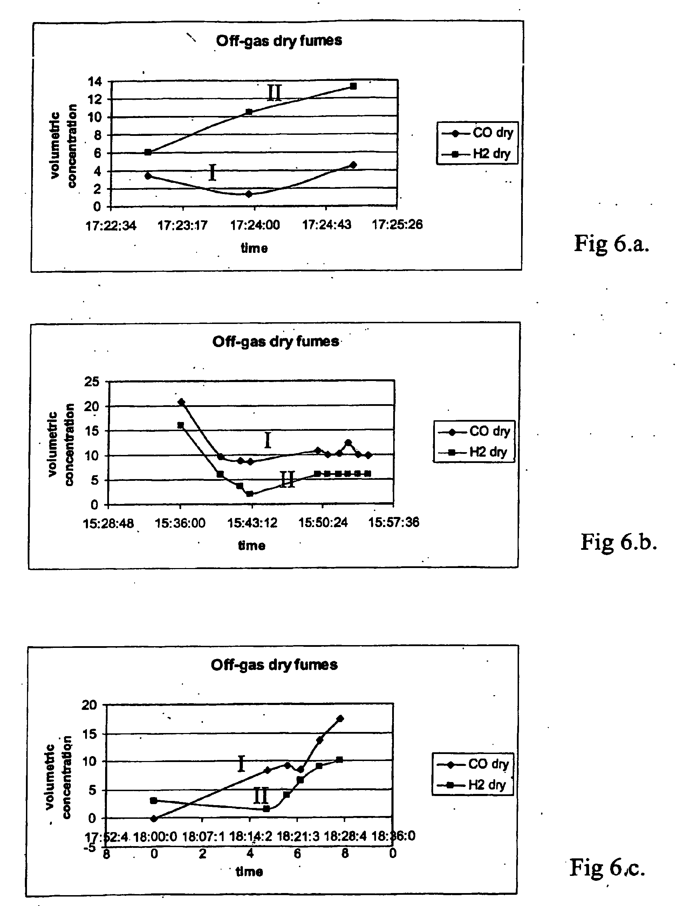

La mesure de CO est préférée à celle de $H_2$ car la mesure de la teneur en $H_2$ est plus délicate à réaliser car l'hydrogène $H_2$ étant soluble dans l'aluminium liquide, cela peut fausser la mesure. Cependant, comme la surface d'échange entre l'atmosphère et le métal liquide est limitée, la détection de l'oxydation par $H_2$ est possible car la mesure de $H_2$ est nette et franche comme le prouvent les figures 6.

Ces figures 6 présentent des valeurs des enregistrements temporels des concentrations de CO et de $H_2$ au cours d'une fusion dans un four équipé d'un brûleur fonctionnant en mode de combustion à l'oxygène. Les courbes I y représentent les teneurs en CO et les coubes II les teneurs en $H_2$.. La figure 6.a correspond à un niveau de température de fumées de 935˚C et les figures b et c à un niveau de température de 1080˚C.

L'analyse de fumées exposée ci-dessus peut être utilisée comme base pour une régulation d'un procédé de fusion de l'aluminium.

Après avoir introduit de l'aluminium solide dans un four, on réalise sa fusion, au cours de laquelle on détecte les variations en monoxyde de carbone et de la tempérture dans les fumées sortant du four.

Les signaux issus des capteurs 10, 12 et éventuellement 14, 16, 18 peuvent être soumis à un traitement du signal approprié, puis être utilisés comme entrées d'un processus de régulation. Toutes ces opérations peuvent être réalisées à l'aide d'un ordinateur 20.

Une possibilité de régulation est constituée par la réduction de la densité de puissance du brûleur 24 lors de la détection de l'oxydation, l'ordinateur 20 donnant par exemple une consigne aux moyens d'alimentation 15 et 17.

Une autre possibilité réside dans la modification des rapports des débits de combustible et d'oxydant fournis au brûleur 24, là encore par action sur les moyens 15 et 17. Habituellement, cette composition est ajustée, soit pour donner la puissance maximale, avec un petit excès d'oxygène (teneur en oxygène dans les fumées comprise entre 0 et 2 à 3% d'oxygène), soit par utilisation, chez certains producteurs, uniquement de brûleurs à mélange pauvre en oxygène, assurant ainsi l'absence d'accès direct de l'oxygène à l'aluminium. On obtient une telle atmosphère de gaz de combustion à caractère réducteur soit en fermant partiellement le dispositif 15 d'injection de l'oxydant, soit en augmentant, si possible, l'ouverture du dispositif d'injection de combustible 17. D'une valeur du rapport du débit d'oxydant au débit de combustible de 100%, on peut abaisser ce rapport à 70 %.

Le revêtement du métal par une atmosphère réductrice, uniquement après détection de l'oxydation, permet de réaliser des économies sur le rendement thermique lorsqu'il n'existe pas de pertes de combustion.

A cet effet des moyens (non représentés sur la figure 1) peuvent être prévus pour introduire un tel gaz réducteur dans le four, par exemple des moyens d'alimentation en ce gaz et un conduit introduisant ce gaz dans le four, l'ouverture du conduit étant commandée par l'ordinateur 20 lors d'une détection de l'oxydation.

En fait, une flamme pauvre en oxygène produit du monoxyde de carbone CO qui contient une partie d'énergie qui n'est pas transmise à la charge. Des brûleurs à oxygène très efficaces peuvent tolérer une telle perte d'énergie.

Un autre procédé de régulation consiste, lorsque le début de l'oxydation est détecté, dans une étape d'agitation du bain 4 par des pompes 30 commandées par l'ordinateur 20.

Dans ce cas, l'analyse des fumées peut aussi indiquer si le niveau de puissance de combustion au-dessus du bain agité peut être augmenté ou doit être réduit.

Par ailleurs, l'analyse des fumées selon l'invention, et l'addition au cours du temps de la quantité d'oxyde produit, peut être utilisée comme outil de prise de décision en ce qui concerne l'opération d'écumage.

L'optimisation de la fréquence d'écumage est un avantage au point de vue du rendement thermique (aucun refroidissement de l'intérieur du four tant que la porte n'est pas ouverte) et pour le rendement en métal (puisqu'on évite des accès inutiles de l'air au métal chaud).

Enfin, l'analyse selon l'invention, et notamment celle de la concentration en vapeur d'eau $H_2O$ peut être utilisée pour le diagnostic du four.

Un diagnostic d'entrée d'air est en effet important pour le rendement thermique et l'évaluation de l'équilibre thermique.

L'invention trouve application au domaine de la fusion de l'aluminium. Dans l'industrie de l'aluminium secondaire, une amélioration de 1 % de la quantité de métal produite est équivalente à une économie de 10 % d'énergie.

**Revendications**

1.  Procédé de fusion d'aluminium, dans lequel :

    - on introduit de l'aluminium solide dans un four (2),
    - on réalise la fusion de l'aluminium, pour former un bain d'aluminium (4),
    - on mesure la concentration en CO des fumées et leur température,
    - on détecte les variations de concentration en monoxyde de carbone (CO) et de la température dans les fumées (6) sortant du four,
    - on en déduit la formation d'oxydes d'aluminium à la surface du bain d'aluminium (4), les variations de CO et de température lors d'une oxydation de l'aluminium dans le four étant dans le même sens ou ayant le même signe
    - on régule le procédé de fusion en fonction de la formation d'oxydes d'aluminium.

2.  Procédé selon la revendication 1, dans lequel on détecte en outre la variation ou la formation de vapeur d'eau ($H_2O$) et/ou de dioxyde de carbone ($CO_2$) et/ou d'oxygène ($O_2$).

3.  Procédé selon la revendication 1 ou 2, dans lequel on réalise la comparaison des sens de variations de la concentration en monoxyde de carbone (CO) et de la température.

4.  Procédé selon la revendication 1 ou 2, dans lequel on réalise le produit ou le rapport des variations temporelles de la concentration en monoxyde de carbone (CO) et de la température.

**5.** Procédé de fusion d'aluminium, selon l'une des revendications 1 à 4. comportant en outre les étapes suivantes :

- on mesure le débit de combustible et le débit d'oxydant.
- on établit le rapport de débit d'oxydant au débit de combustible, pour en déduire, à l'aide d'une table de référence établie par calibration du brûleur, la teneur en monoxyde de carbone CO des fumées qu'aurait produites le brûleur sans interaction avec la charge.

**6.** Procédé selon la revendication 5, dans lequel on mesure la teneur en monoxyde de carbone CO dans les fumées dont on soustrait la valeur de la teneur de monoxyde de carbone que produit le brûleur en l'absence de charge, et on en déduit la quantité d'oxyde d'aluminium formé.

**7.** Procédé de fusion d'aluminium selon l'une des revendications 1 à 4, dans lequel :

- on mesure en outre le débit de combustible et le débit d'oxydant.
- on établit le rapport de débit de d'oxydant au débit de combustible, pour en déduire, à l'aide d'une table de référence établie par calibration du brûleur, la teneur en hydrogène H2 des fumées qu'aurait produites le brûleur sans interaction avec la charge.

**8.** Procédé selon la revendication 7 dans lequel on mesure dans les fumées la teneur en hydrogène H2 dont on soustrait la valeur de la teneur en hydrogène que produit le brûleur en l'absence de charge et on en déduit la quantité d'oxyde d'aluminium formé.

**9.** Procédé selon l'une des revendications 1 à 8, dans lequel on détermine en outre si la température du bain est supérieure à la température de pyrolyse de revêtements et peintures de l'aluminium.

**10.** Procédé selon l'une des revendications 1 à 9 dans lequel le monoxyde de carbone (CO) et/ou la vapeur d'eau (H2O) et/ou le dioxyde de carbone (CO2) et/ou l'oxygène (O2) sont détectés à l'aide d'une ou de plusieurs diodes laser (10, 14, 16, 18).

**11.** Procédé selon l'une des revendications précédentes, dans lequel, suite à une détection de formation d'oxydes d'aluminium, on réduit la puissance d'au moins un brûleur (24) servant à réaliser la fusion de l'aluminium.

**12.** Procédé selon l'une des revendications 1 à 11, dans lequel, suite à une détection de formation d'oxydes d'aluminium, on modifie la stoechiométrie d'au moins un brûleur (24) servant à réaliser la fusion de l'aluminium.

**13.** Procédé selon l'une des revendications 1 à 12, dans lequel, suite à une détection de formation d'oxydes d'aluminium, on réalise une agitation du bain d'aluminium.

**14.** Procédé selon l'une des revendications 1 à 13, dans lequel, suite à une détection de formation d'oxydes d'aluminium, on effectue une opération d'écumage de la surface du bain d'aluminium.

**15.** Procédé selon l'une des revendications 1 à 14, dans lequel, suite à une détection de formation d'oxydes d'aluminium, on introduit une atmosphère réductrice dans le four.

**Claims**

**1.** Method of melting aluminium, in which:

- solid aluminium is introduced into a furnace (2) ;
- the aluminium is melted, in order to form an aluminium melt pool (4);
- the CO concentration of the flue gases and their temperature are measured;
- the variations in carbon monoxide (CO) concentration and the temperature in the flue gases (6) exiting the furnace are detected;
- the formation of aluminium oxides on the surface of the aluminium melt pool (4) is deduced therefrom, the CO and temperature variations during oxidation of the aluminium in the furnace being in the same direction or having the same sign; and
- the melting process is regulated depending on the formation of aluminium oxides.

**2.** Method according to Claim 1, in which the variation in or formation of water vapour ($H_2O$) and/or carbon dioxide ($CO_2$) and/or oxygen ($O_2$) is also detected.

**3.** Method according to Claim 1 or 2, in which the directions of the variations in the carbon monoxide (CO) concentration and in the temperature are compared.

**4.** Method according to Claim 1 or 2, in which the product or the ratio of the time variations in the carbon monoxide (CO) concentration and in the temperature is taken.

**5.** Method of melting aluminium according to one of Claims 1 to 4, which furthermore includes the following steps:

- the fuel flow rate and the oxidizer flow rate are measured; and
- the ratio of the oxidizer flow rate to the fuel flow rate is determined, in order to deduce therefrom, using a reference table established by calibration of the burner, the carbon monoxide (CO) content of the flue gases that the burner would have produced without any interaction with the charge.

**6.** Method according to Claim 5, in which the carbon monoxide (CO) content in the flue gases is measured, from which the value of the carbon monoxide content that the burner produces in the absence of charge is subtracted, and from this is deduced the amount of aluminium oxide formed.

**7.** Method of melting aluminium according to one of Claims 1 to 4, in which

- furthermore the fuel flow rate and the oxidizer flow rate are measured; and
- the ratio of the oxidizer flow rate to the fuel flow rate is determined, in order to deduce therefrom, using a reference table established by calibration of the burner, the hydrogen ($H_2$) content of the flue gases that the burner would have produced without any interaction with the charge.

**8.** Method according to Claim 7, in which the hydrogen ($H_2$) content in the flue gases is measured, from which the value of the hydrogen content that the burner produces in the absence of a charge is subtracted, and from this is deduced the amount of aluminium oxide formed.

**9.** Method according to one of Claims 1 to 8, in which it is furthermore determined whether the temperature of the melt pool is above the temperature for pyrolizing any coatings and paint on the aluminium.

**10.** Method according to one of Claims 1 to 9, in which the carbon monoxide (CO) and/or the water vapour ($H_2O$) and/or carbon dioxide ($CO_2$) and/or the oxygen ($O_2$) are detected by means of one or more diode lasers (10, 14, 16, 18).

**11.** Method according to one of the preceding claims, in which, following detection of aluminium oxide formation, the power of at least one burner (24) serving to melt the aluminium is reduced.

**12.** Method according to one of Claims 1 to 11, in which, following detection of aluminium oxide formation, the stoichiometry of at least one burner (24) serving to melt the aluminium is modified.

**13.** Method according to of Claims 1 to 12, in which, following detection of aluminium oxide formation, the aluminium melt pool is stirred.

**14.** Method according to one of Claims 1 to 13, in which, following detection of aluminium oxide formation, an operation of dedrossing the surface of the aluminium melt pool is carried out.

**15.** Method according to one of Claims 1 to 14, in which, following detection of aluminium oxide formation, a reducing atmosphere is introduced into the furnace.

**Patentansprüche**

**1.** Aluminiumschmelzverfahren, bei welchem:

- ein Ofen (2) mit feststofflichem Aluminium beschickt wird,

- das Aluminium geschmolzen wird, um ein Aluminiumbad (4) zu bilden,
- die Konzentration an CO in den Abgasen sowie deren Temperatur gemessen wird,
- die Schwankungen der Kohlenmonoxid(CO)-Konzentration und der Temperatur in den Abgasen (6), die aus dem Ofen entweichen, detektiert werden.
- daraus die Bildung von Aluminiumoxiden an der Oberfläche des Aluminiumbades (4) abgeleitet wird, da bei einer Oxidation des Aluminiums im Ofen die Schwankungen des CO und der Temperatur in dieselbe Richtung gehen oder das gleiche Vorzeichen aufweisen,
- das Schmelzverfahren in Abhängigkeit von der Bildung von Aluminiumoxiden reguliert wird.

2. Verfahren nach Anspruch 1, wobei darüber hinaus die Schwankungen hinsichtlich des Wasserdampfes (H2O) und/ oder des Kohlendioxids (CO2) und/oder des Sauerstoffs (O2) oder auch die Bildung dieser Stoffe detektiert werden.

3. Verfahren nach Anspruch 1 oder 2, wobei die Richtungen der Schwankungen der Kohlenmonoxid(CO)-Konzentration und der Temperatur verglichen werden.

4. Verfahren nach Anspruch 1 oder 2, wobei die temporären Schwankungen der Kohlenmonoxid (CO)-Konzentration und der Temperatur miteinander multipliziert oder ins Verhältnis gesetzt werden.

5. Aluminiumschmelzverfahren nach einem der Ansprüche 1 bis 4, welches darüber hinaus die folgenden Schritte aufweist:

- Messen der Flussrate des Brennstoffs und der Flussrate des Oxidationsmittels.
- Bestimmen des Verhältnisses zwischen der Oxidationsmittelflussrate und der Brennstoffflussrate, um daraus mit Hilfe einer Tabelle von Bezugswerten, die durch Kalibrierung des Brenners erstellt wurde, den Kohlenmonoxid(CO)-Gehalt der Abgase abzuleiten, die der Brenner ohne Wechselwirkung mit Ladung erzeugt hätte.

6. Verfahren nach Anspruch 5, wobei vom Kohlenmonoxid(CO)-Gehalt, der in den Abgasen gemessen wird, der Wert des Kohlenmonoxidgehalts, welchen der Brenner ohne Ladung erzeugt, abgezogen wird, um daraus die Menge an gebildetem Aluminiumoxid abzuleiten.

7. Aluminiumschmelzverfahren nach einem der Ansprüche 1 bis 4, bei welchem:

- darüber hinaus die Flussrate des Brennstoffs und die Flussrate des Oxidationsmittels gemessen wird.
- das Verhältnis zwischen der Oxidationsmittelflussrate und der Brennstoffflussrate bestimmt wird, um daraus mit Hilfe einer Tabelle von Bezugswerten, die durch Kalibrierung des Brenners erstellt wurde, den Wasserstoff (H2)-Gehalt der Abgase abzuleiten, die der Brenner ohne Wechselwirkung mit Ladung erzeugt hätte.

8. Verfahren nach Anspruch 7, wobei vom Wasserstoff(H2)-Gehalt, der in den Abgasen gemessen wird, der Wert des Wasserstoffgehalts, welchen der Brenner ohne Ladung erzeugt, abgezogen wird, um daraus die Menge an gebildetem Aluminiumoxid abzuleiten.

9. Verfahren nach einem der Ansprüche 1 bis 8, wobei darüber hinaus bestimmt wird, ob die Temperatur des Bades höher als die Pyrolysetemperatur von Beschichtungen und Anstrichmitteln des Aluminiums ist.

10. Verfahren nach einem der Ansprüche 1 bis 9, wobei das Kohlenmonoxid (CO) und/oder der Wasserdampf (H2O) und/oder das Kohlendioxid (CO2) und/oder der Sauerstoff (O2) mit Hilfe einer oder mehrerer Laserdioden (10, 14, 16, 18) detektiert werden.

11. Verfahren nach einem der vorhergehenden Ansprüche, bei welchem, in Folge einer Detektion der Bildung von Aluminiumoxiden, die Leistung mindestens eines Brenners (24), der/die dazu dient/dienen, das Aluminium zu schmelzen, verringert wird.

12. Verfahren nach einem der Ansprüche 1 bis 11, bei welchem, in Folge einer Detektion der Bildung von Aluminiumoxiden, die Stöchiometrie mindestens eines Brenners (24), der/die dazu dient/dienen, das Aluminium zu schmelzen, verändert wird.

13. Verfahren nach einem der Ansprüche 1 bis 12, bei welchem, in Folge einer Detektion der Bildung von Aluminiumoxiden, das Aluminiumbad in Bewegung gesetzt wird.

14. Verfahren nach einem der Ansprüche 1 bis 13, bei welchem, in Folge einer Detektion der Bildung von Aluminiumoxiden, an der Oberfläche des Aluminiumbades eine Abschlackung durchgeführt wird.

15. Verfahren nach einem der Ansprüche 1 bis 14, bei welchem, in Folge einer Detektion der Bildung von Aluminiumoxiden, eine reduzierende Atmosphäre in den Ofen eingeleitet wird.

FIG.1

FIG.2

FIG.3A

FIG.3B

15

FIG 4

FIG 5

Fig 6.a.

Fig 6.b.

Fig 6.c.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 58227706 A
- EP 962540 A
- US 5563903 A
- US 3759702 A
- JP 4293740 A
- JP 4314835 A
- EP 793071 A
- GB 2286458 A